# FASCICULE DE BREVET EUROPEEN

(11) **EP 1 151 705 B1**
(45) Date de publication et mention de la délivrance du brevet: **28.07.2004**
(21) Numéro de dépôt: 01401145.6
(22) Date de dépôt: 03.05.2001
(51) Int. Cl.: A47J 27/04, F22B 1/28

(54) **Procédé de régulation de température dans un four vapeur**
Verfahren zur Temperaturregelung in einem Dampfofen
Method for regulating the temperature in a steam oven

(30) Priorité: 05.05.2000 FR 0005795
(43) Date de publication de la demande: 07.11.2001
(73) Titulaire: Brandt Industries, 92500 Rueil Malmaison (FR)
(72) Inventeur: Baratin, Nicole, 45470 Loury (FR); Vincent, Olivier, 45190 Beaugency (FR)
(74) Mandataire: Santarelli

(56) Documents cités:
- EP-A- 0 673 615
- US-A- 3 814 901
- US-A- 4 891 498

## Description

La présente invention concerne un procédé de régulation de température dans un four vapeur.

Elle concerne également un four vapeur adapté à mettre en oeuvre le procédé de régulation conforme à l'invention.

On connaît un four vapeur qui permet de cuire des aliments en vapeur saturée à 100°C et à pression atmosphérique.

Ce type de four vapeur comprend une enceinte de cuisson dans laquelle est disposé un générateur de vapeur.

Ce générateur de vapeur est alimenté en eau par une buse d'amenée d'eau qui permet, à partir d'un réservoir d'eau, d'envoyer de l'eau sur le générateur de vapeur.

On obtient ainsi dans l'enceinte de cuisson une atmosphère saturée en vapeur, à une température de 100°C.

Cependant, cette température élevée n'est pas adaptée pour la cuisson à la vapeur d'aliments fragiles, tels que les poissons.

La présente invention a pour but de proposer un procédé de régulation de température d'un four et un four vapeur permettant de mettre en oeuvre ce procédé, permettant avantageusement de régler la température à l'intérieur du four vapeur en fonction de son utilisation.

Le procédé de régulation visé par l'invention permet de réguler la température dans une enceinte de four vapeur comprenant un générateur de vapeur disposé dans cette enceinte.

Conformément à l'invention, le procédé de régulation comprend les étapes suivantes :
- mesure de la température à l'intérieur de l'enceinte ;
- calcul d'un écart de température entre la température mesurée et une température de consigne ;
- comparaison dudit écart de température à une valeur de seuil ; et
- alimentation en eau du générateur de vapeur si l'écart de température est supérieur à la valeur de seuil et arrêt de l'alimentation en eau si l'écart de température est inférieur à la valeur de seuil.

Le procédé de régulation conforme à l'invention permet ainsi de maintenir une température fixée dans une enceinte de four vapeur, en régulant l'alimentation en eau du générateur de vapeur.

Cette gestion de la température à l'intérieur de l'enceinte du four vapeur permet d'adapter la température de cuisson au type d'aliment.

On peut ainsi par exemple réchauffer des plats sans risquer de cuire des aliments ou encore procéder à une décongélation de produits frais sans cuire ces derniers.

Selon une caractéristique préférée de l'invention, à l'étape d'alimentation en eau, l'eau est envoyée par intermittence au générateur de vapeur.

L'alimentation par intermittence du générateur de vapeur permet d'obtenir dans l'enceinte du four vapeur une évaporation régulière, et d'éviter une saturation en eau stagnante du générateur de vapeur.

Selon une autre caractéristique préférée de l'invention, à l'étape d'alimentation en eau, une quantité d'eau constante est envoyée par intermittence au générateur de vapeur.

La gestion précise de la quantité d'eau envoyée au générateur et évaporée par celui-ci permet de bien maîtriser l'augmentation de température dans l'enceinte du four vapeur.

Selon une caractéristique avantageuse de l'invention, cette quantité d'eau constante est inférieure à 5 g, et de préférence égale à 3 g.

L'alimentation en eau est ainsi réalisée de manière constante, en faible quantité, ce qui permet une montée progressive en température.

On peut ainsi atteindre la température dans une consigne sans risquer de dépasser celle-ci. On évite ainsi toute surchauffe à l'intérieur de l'enceinte du four vapeur.

Selon une autre caractéristique avantageuse de l'invention, l'eau est envoyée périodiquement au générateur de vapeur.

On obtient ainsi une alimentation régulière en eau du générateur de vapeur, permettant d'obtenir une montée en température régulière à l'intérieur de l'enceinte du four vapeur.

Selon une autre caractéristique préférée de l'invention, simultanément à l'étape d'alimentation en eau, le procédé de régulation comprend une étape de chauffage de l'enceinte par au moins une résistance électrique disposée le long d'une paroi de l'enceinte.

L'allumage de la résistance électrique lors de l'alimentation en eau permet d'accélérer la montée en température à l'intérieur de l'enceinte du four vapeur et d'éviter toute condensation de la vapeur sur les parois de l'enceinte.

Selon un autre aspect de l'invention, un four vapeur comprend une enceinte de cuisson, un générateur de vapeur disposé dans l'enceinte et une buse d'amenée d'eau dans le générateur, la buse communiquant avec un réservoir d'eau par l'intermédiaire d'une pompe.

Conformément à l'invention, le four vapeur comprend une sonde de température adaptée à mesurer la température à l'intérieur de l'enceinte, des moyens d'acquisition de température de consigne et des moyens de régulation connectés à la sonde de température et auxdits moyens d'acquisition et adaptés à commander le fonctionnement de la pompe pour envoyer de l'eau au générateur de vapeur.

Le four vapeur conforme à l'invention permet ainsi de mettre en oeuvre le procédé de régulation grâce auquel le fonctionnement de la pompe pour envoyer de l'eau est commandé par des moyens de régulation en fonction de la température mesurée à l'intérieur de l'enceinte du four vapeur et une température de consigne.

Un tel four vapeur permet ainsi de cuire ou réchauffer des aliments à une température prédéterminée, généralement fixée à une valeur inférieure à 100°C.

Selon une caractéristique préférée de l'invention, le four vapeur comporte un débit-mètre sur le circuit d'eau entre le réservoir et la buse d'amenée d'eau au générateur de vapeur.

Ce débit-mètre permet de mesurer de manière précise la quantité d'eau fournie au générateur de vapeur pendant toute la régulation de la température à l'intérieur de l'enceinte du four vapeur.

De manière pratique, les moyens de régulation sont adaptés à commander le fonctionnement de la pompe en fonction du débit mesuré par le débit-mètre de manière à envoyer par intermittence une quantité d'eau constante au générateur de vapeur.

D'autres particularités et avantages de l'invention apparaîtront encore dans la description ci-après.

Aux dessins annexés, donnés à titre d'exemples non limitatifs :
- la Figure 1 est une vue schématique illustrant un four vapeur conforme à un mode de réalisation de l'invention ;
- la Figure 2 est un schéma bloc illustrant le fonctionnement des moyens de régulation dans un four vapeur conforme à l'invention ; et
- la Figure 3 est une courbe illustrant la valeur de la température à l'intérieur de l'enceinte du four en fonction du temps lors de la mise en oeuvre du procédé de régulation conforme à l'invention.

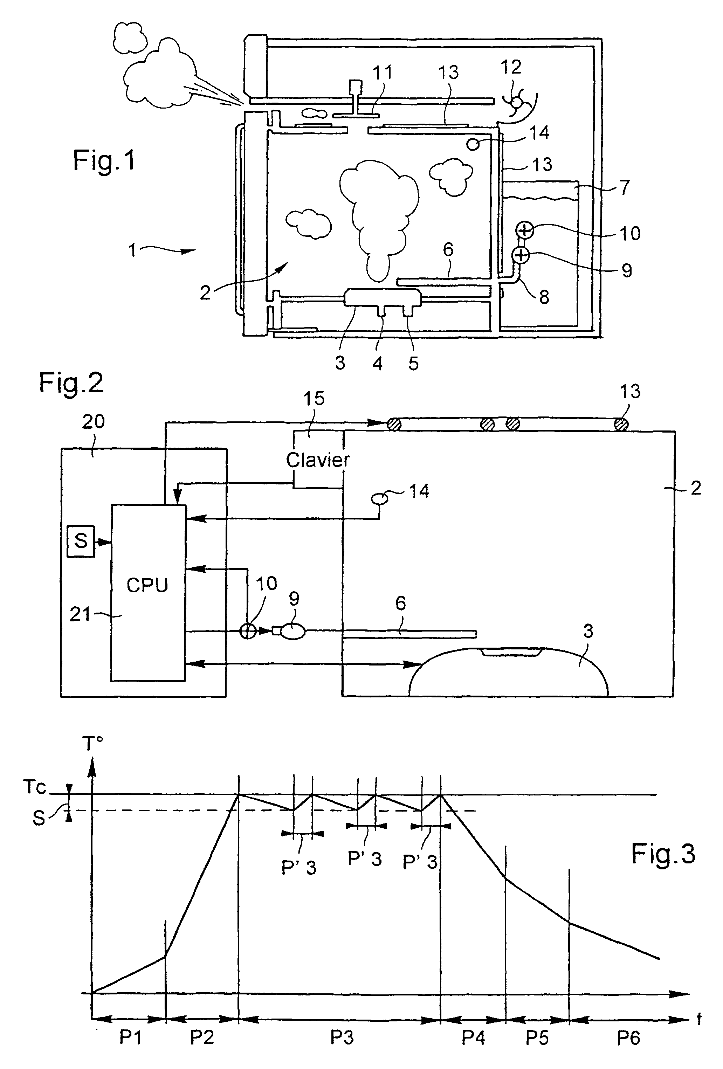

On va décrire tout d'abord en référence à la Figure 1 un four vapeur conforme à un mode de réalisation de l'invention.

Ce four vapeur 1 comprend une enceinte de cuisson 2 dans laquelle des aliments à cuire ou à réchauffer peuvent être placés.

Un générateur de vapeur 3 est disposé dans cette enceinte de cuisson 2, de préférence dans le fond de l'enceinte.

Ce générateur de vapeur est par exemple constitué d'une coupelle métallique dans laquelle est noyée une résistance électrique permettant de chauffer la coupelle métallique. L'eau s'évapore ainsi au contact de la coupelle métallique chauffée.

Généralement, une sonde de régulation 4 est montée sur ce générateur de vapeur 3 de manière à réguler la température de chauffe de ce dernier.

A titre d'exemple non limitatif, la température du générateur de vapeur 3 peut être maintenue à environ 120°C.

Un limiteur de sécurité 5 ou klixon est également prévu sur ce générateur de vapeur.

Il permet en cas de fonctionnement anormal (mauvaise commande de l'électronique entraînant une surchauffe du générateur) de couper l'alimentation électrique du générateur 3.

Une buse d'amenée d'eau 6 débouche au-dessus du générateur de vapeur 3 et permet d'alimenter en eau ce générateur de vapeur à partir d'un réservoir 7 logé dans la carcasse du four vapeur 1.

Sur le circuit d'eau 8, constitué d'une canalisation d'eau, est montée une pompe 9 qui permet de véhiculer l'eau à partir du réservoir jusqu'au générateur de vapeur.

De manière classique, cette pompe 9 est autoamorçante.

En outre, un débit-mètre 10 est également placé sur le circuit d'eau 8 afin de mesurer la quantité d'eau fournie au générateur 3 par l'intermédiaire de la buse 6.

Ainsi, l'enceinte de cuisson 2 est chauffée par de la vapeur d'eau créée directement dans l'enceinte.

De manière connue, le four vapeur 1 comporte également un système permettant de laisser échapper la vapeur hors de l'enceinte de cuisson 2.

Ce système comporte notamment un clapet 11 prévu dans la partie supérieure de l'enceinte de cuisson 2 et une turbine de ventilation permettant d'accélérer la sortie de la vapeur du four

Enfin, afin d'accélérer la montée en température dans l'enceinte de cuisson 2 et d'éviter toute condensation sur les parois du four, l'enceinte de cuisson 2 comprend une résistance 13 disposée le long d'une paroi de la cavité 2.

Dans cet exemple, une résistance électrique 13 est disposée sur la paroi supérieure de la cavité et une seconde résistance électrique 13 est disposée sur la paroi constituant le fond de la cavité 2.

Ces résistances électriques 13 forment ainsi une nappe chauffante autour de l'enceinte de cuisson.

Conformément à l'invention, le four vapeur comporte également une sonde de température 14 adaptée à mesurer la température à l'intérieur de l'enceinte de cuisson 2.

De préférence, cette sonde de température 14 est disposée dans la partie haute de l'enceinte de cuisson 2, afin de mesurer la température de cette enceinte dans la partie la plus chaude.

Comme mieux illustré à la Figure 2, ce four vapeur comprend également des moyens de régulation 20 qui sont adaptés à commander le fonctionnement de la pompe 9 en fonction du débit d'eau mesuré par le débit-mètre 10 de manière à envoyer par intermittence une quantité d'eau constante au générateur de vapeur 3.

Le procédé de régulation mis en oeuvre par ces moyens de régulation 20 sera mieux compris en référence à la description du procédé de régulation qui suit.

Ces moyens de régulation 20 peuvent comporter un microprocesseur 21 monté sur une carte informatique 20. Ces moyens de régulation 20 sont connectés à la sonde de température 14, au débit-mètre 10 et à des moyens d'acquisition 15 qui permettent de fournir au système de régulation une température de consigne Tc.

Ces moyens d'acquisition 15 peuvent être constitués de manière classique d'un clavier, éventuellement associé à un écran, qui permettent à l'utilisateur de régler la température de consigne Tc désirée.

A titre d'exemple cette température de consigne Tc peut être comprise entre 50°C et 100°C.

Le système de régulation 20 permet à partir des données fournies par les moyens d'acquisition 15, la sonde de température 14 et le débit-mètre 10, de commander le fonctionnement de la pompe 9 et de la nappe chauffante formée de la résistance électrique 13.

Ce système de régulation 20 permet également de manière classique de contrôler la température du générateur de vapeur 3 à partir des informations données par la sonde de température 4.

L'ensemble du programme de régulation utilisé par le four vapeur peut être mémorisé dans une mémoire morte, ainsi qu'une valeur de seuil s utilisée lors de la régulation de la température dans l'enceinte de cuisson 2.

On va décrire à présent, en référence à la Figure 3, le procédé de régulation de la température dans l'enceinte 2 du four vapeur décrit précédemment.

La cuisson dans le four vapeur 1 se décompose en plusieurs phases successives.

Préalablement au lancement de cette cuisson, l'utilisateur fixe la valeur de température de consigne Tc à l'aide du clavier 15. A titre d'exemple, ici, cette valeur de température de consigne Tc est fixée à 60°C.

Une première phase P1 est une phase de préchauffage de l'enceinte pendant laquelle on n'envoie pas d'eau et seul le générateur de vapeur 3 est chauffé à sa température de régulation, par exemple égale à 120°C.

A la fin de cette première phase de préchauffage P1, une deuxième phase P2 de montée en température est mise en oeuvre.

Pour cela, de l'eau est fournie au générateur de vapeur 3 par la buse 6.

La quantité d'eau envoyée est constante et par exemple égale à 5,5 g toutes les douze secondes.

Cette phase de montée en température se poursuit jusqu'au moment où la température mesurée par la sonde 14 à l'intérieur de l'enceinte 2 est égale à la température de consigne Tc.

A cet instant, l'alimentation en eau du générateur de vapeur 3 est stoppée.

Une phase de régulation P3 proprement dite est alors mise en oeuvre conformément à l'invention.

Pendant cette phase de régulation P3, on mesure la température à l'intérieur de l'enceinte 2 grâce à la sonde de température 14 pilotée par le microprocesseur 21.

A partir de la mesure de cette température, le microprocesseur 21 calcule l'écart de température existant entre la température mesurée et la température de consigne Tc et compare cet écart de température à une valeur de seuil s.

Cette valeur de seuil s peut être fixée par exemple à 1°C.

Tant que l'écart de température ainsi calculé reste inférieur à la valeur de seuil, l'alimentation en eau du générateur de vapeur 3 est arrêté.

En revanche, dès que l'écart de température calculé est supérieur à la valeur de seuil s, on alimente de nouveau en eau le générateur de vapeur 3.

Pendant cette phase d'alimentation P'3, l'eau est envoyée par intermittence au générateur de vapeur 3.

De préférence, cet envoi d'eau est réalisé de manière périodique, environ toutes les douze secondes.

A chaque fois que de l'eau est envoyée au générateur de vapeur 3, la quantité d'eau envoyée est constante.

Cette quantité d'eau constante doit rester suffisamment faible pour permettre une évaporation régulière de l'eau dans le générateur de vapeur 3 et une montée progressive de la température dans l'enceinte.

A titre d'exemple cette quantité d'eau constante reste inférieure à 5 g toutes les douze secondes, et de préférence, est égale à 3 g toutes les douze secondes.

La pompe 9 est commandée à cet effet par le microprocesseur 21 de la carte électronique 20 grâce à l'information mesurée par le débit-mètre 10.

Ce dernier mesure en continu la quantité d'eau envoyée et transmet l'information au microprocesseur 21.

Bien entendu, bien que la quantité d'eau envoyée par intermittence au générateur de vapeur est constante, la quantité d'eau totale envoyée lors de la phase de régulation P'3 dépend de la température de consigne Tc fixée pour la cuisson.

En effet, la quantité d'eau nécessaire pour élever la température dans la cavité 2 dépend de la valeur de la température de consigne Tc.

Ici, lorsque la température de consigne est fixée à 60°C, il faut environ procéder à deux envois d'eau, soit environ 6 g, pour augmenter la température à l'intérieur de l'enceinte 2 d'environ 7°C.

En revanche, si la température de consigne Tc est fixée à une valeur plus haute, de l'ordre de 90°C, on constate qu'il faut alors 7 envois d'eau, soit environ 20 g, pour augmenter la température à l'intérieur de l'enceinte 2 d'environ 5°C.

On constate sur la Figure 3, lors de la phase de régulation P3, que des phases d'alimentation en eau P'3 sont mises en oeuvre dès que la température à l'intérieur de l'enceinte descend sous la température de consigne Tc, au-delà de la valeur de seuil s.

En outre, simultanément à l'alimentation en eau lors des phases P'3, une étape de chauffage de l'enceinte 2 est mise en oeuvre par l'allumage d'au moins une résistance électrique 13 disposée le long de parois de la cavité 2.

Le fonctionnement de la nappe chauffante par intermittence, lors de cette phase de régulation P3, permet d'accélérer la montée en température dans l'enceinte 2 lors des phases d'alimentation en eau P'3 et d'éviter par ailleurs une surchauffe dans cette enceinte 2 lorsque l'alimentation en eau est coupée.

Après cette phase de régulation P3, le cycle de cuisson dans le four vapeur 1 comprend de manière classique une phase de séchage P4 dans laquelle l'alimentation en eau est coupée, une phase d'évacuation de la vapeur P5, grâce notamment à l'ouverture du clapet 11 et à l'actionnement du ventilateur 12 et une phase de maintien au chaud P6 sans envoi d'eau.

Ainsi, la gestion de la température à l'intérieur de l'enceinte de cuisson 2, permet d'adapter cette température au type d'aliment à cuire.

Une température de l'ordre de 50-70°C permet de cuire notamment des aliments fragiles comme certains poissons.

Elle est aussi parfaitement adaptée à la décongélation de produits frais, tels que des fruits, et permet de réchauffer des plats sans faire cuire les aliments.

Bien entendu, de nombreuses modifications peuvent être apportées à l'exemple de réalisation décrit précédemment sans sortir du cadre de l'invention comme défini par les revendications suivantes.

## Revendications

1. Procédé de régulation de la température dans une enceinte (2) de four vapeur (1) comprenant un générateur de vapeur (3) disposé dans ladite enceinte (2), **caractérisé en ce qu'**il comprend les étapes suivantes :
- mesure de la température à l'intérieur de l'enceinte (2) ;
- calcul d'un écart de température entre la température mesurée et une température de consigne (Tc) ;
- comparaison dudit écart de température à une valeur de seuil (s) ; et
- alimentation en eau du générateur de vapeur (3) si l'écart de température est supérieur à la valeur de seuil (s) et arrêt de l'alimentation en eau si l'écart de température est inférieur à la valeur de seuil (s).

2. Procédé de régulation conforme à la revendication 1, **caractérisé en ce qu'**à l'étape d'alimentation en eau (P'3), l'eau est envoyée par intermittence au générateur de vapeur (3).

3. Procédé de régulation conforme à l'une des revendications 1 ou 2, **caractérisé en ce qu'**à l'étape d'alimentation en eau (P'3), une quantité d'eau constante est envoyée par intermittence au générateur de vapeur (3).

4. Procédé de régulation conforme à la revendication 3, **caractérisé en ce que** ladite quantité d'eau constante est inférieure à 5 g.

5. Procédé de régulation conforme à la revendication 4, **caractérisé en ce que** ladite quantité d'eau constante est égale à 3 g.

6. Procédé de régulation conforme à l'une des revendications 2 à 5, **caractérisé en ce que** l'eau est envoyée périodiquement au générateur de vapeur (3).

7. Procédé de régulation conforme à la revendication 6, **caractérisé en ce que** l'eau est envoyée toutes les douze secondes au générateur de vapeur (3).

8. Procédé de régulation conforme à l'une des revendications 1 à 7, **caractérisé en ce que** la température de consigne (Tc) est comprise entre 50°C et 100°C.

9. Procédé de régulation conforme à l'une des revendications 1 à 8, **caractérisé en ce que**, simultanément à l'étape d'alimentation en eau (P'3), il comprend une étape de chauffage de l'enceinte (2) par au moins une résistance électrique (13) disposée le long d'une paroi de l'enceinte (2).

10. Four vapeur comprenant une enceinte de cuisson (2), un générateur de vapeur (3) disposés dans l'enceinte (2) et une buse (6) d'amenée d'eau dans ledit générateur (3), la buse (6) communiquant avec un réservoir d'eau (7) par l'intermédiaire d'une pompe (9), **caractérisé en ce qu'**il comprend une sonde de température (14) adaptée à mesurer la température à l'intérieur de l'enceinte (2), des moyens d'acquisition (15) d'une température de consigne (Tc) et des moyens de régulation (20, 21) connectés à la sonde de température (14) et auxdits moyens d'acquisition (15) et adaptés à commander le fonctionnement de la pompe (9) selon le procédé conforme à l'une des revendications 1-9 pour envoyer de l'eau au générateur de vapeur (3).

11. Four vapeur conforme à la revendication 10, **caractérisé en ce que** la sonde de température (14) est disposée en partie haute de l'enceinte de cuisson (2).

12. Four vapeur conforme à l'une des revendications 10 ou 11, **caractérisé en ce qu'**il comporte un débitmètre (10) sur le circuit d'eau (8) entre le réservoir (7) et la buse (6) d'amenée d'eau au générateur de vapeur (3).

13. Four vapeur conforme à la revendication 12, **caractérisé en ce que** les moyens de régulation (20, 21) sont adaptés à commander le fonctionnement de la pompe (9) en fonction du débit mesuré par le débitmètre (10) de manière à envoyer par intermittence une quantité d'eau constante au générateur de vapeur (3).

## Claims

1. Method of regulating the temperature in the chamber (2) of a steam oven (1) comprising a steam generator (3) disposed in the said chamber (2), **characterised in that** it comprises the following steps:
- measuring the temperature inside the chamber (2);
- calculating a temperature difference between the measured temperature and a set temperature (Tc);
- comparing the said temperature difference with a threshold value (s); and
- supplying the steam generator (3) with water if the temperature difference is greater than the threshold value (s) and stopping the supply of water if the temperature difference is less than the threshold value (s).

2. Regulation method according to Claim 1, **characterised in that**, at the water supply step (P'3), the water is sent intermittently to the steam generator (3).

3. Regulation method according to one of Claims 1 or 2, **characterised in that**, at the water supply step (P'3), a constant quantity of water is sent intermittently to the steam generator (3).

4. Regulation method according to Claim 3, **characterised in that** the said constant quantity of water is less than 5 g.

5. Regulation method according to Claim 4, **characterised in that** the said constant quantity of water is 3 g.

6. Regulation method according to one of Claims 2 to 5, **characterised in that** the water is sent periodically to the steam generator (3).

7. Regulation method according to Claim 6, **characterised in that** the water is sent to the steam generator (3) every twelve seconds.

8. Regulation method according to one of Claims 1 to 7, **characterised in that** the set temperature (Tc) is between 50°C and 100°C.

9. Regulation method according to one of Claims 1 to 8, **characterised in that**, simultaneously with the water supply step (P'3), it comprises a step of heating the chamber (2) by at least one electric element (13) disposed along one wall of the chamber (2).

10. Steam oven comprising a cooking chamber (2), a steam generator (3) disposed in the chamber (2) and a nozzle (6) for feeding water into the said generator (3), the nozzle (6) communicating with a water reservoir (7) by means of a pump (9), **characterised in that** it comprises a temperature sensor (14) adapted to measure the temperature inside the chamber (2), means (15) of acquiring a set temperature (Tc) and regulation means (20, 21) connected to the temperature sensor (14) and to the said acquisition means (15) and adapted to control the functioning of the pump (9) according to the method in accordance with one of Claims 1 to 9 in order to send water to the steam generator (3).

11. Steam oven according to Claim 10, **characterised in that** the temperature sensor (14) is disposed at the top part of the cooking chamber (2).

12. Steam oven according to one of Claims 10 or 11, **characterised in that** it comprises a flow meter (10) on the water circuit (8) between the reservoir (7) and the nozzle (6) feeding water to the steam generator (3).

13. Steam oven according to Claim 12, **characterised in that** the regulation means (20, 21) are adapted to control the functioning of the pump (9) according to the flow rate measured by the flow meter (10) so as to send a constant quantity of water intermittently to the steam generator (3).

## Patentansprüche

1. Verfahren zur Regulierung der Temperatur in einem Raum (2) eines Dampfofens (1), welcher einen Dampfgenerator (3) aufweist, der in dem Raum (2) angeordnet ist, **dadurch gekennzeichnet**, das es folgende Schritte umfasst:
- Messung der Temperatur innerhalb des Raumes (2);
- Berechnung einer Temperaturabweichung zwischen der gemessenen Temperatur und einer Solltemperatur (Tc);
- Vergleich der Temperaturabweichung mit einem Schwellenwert (s); und
- Versorgung des Dampfgenerators (3) mit Wasser, wenn die Temperaturabweichung größer ist als der Schwellenwert (s), und Beenden der Versorgung mit Wasser, wenn die Temperaturabweichung kleiner ist als der Schwellenwert (s).

2. Verfahren zur Regulierung nach Anspruch 1, **dadurch gekennzeichnet, dass** bei dem Schritt der Versorgung mit Wasser (P'3) das Wasser dem Dampfgenerator (3) mit Unterbrechungen zugeführt wird.

3. Verfahren zur Regulierung nach Anspruch 1 oder 2, **dadurch gekennzeichnet, dass** bei dem Schritt der Versorgung mit Wasser (P'3) dem Dampfgenerator (3) eine konstante Wassermenge mit Unterbrechungen zugeführt wird.

4. Verfahren zur Regulierung nach Anspruch 3, **dadurch gekennzeichnet, dass** die konstante Wassermenge weniger als 5g beträgt.

5. Verfahren zur Regulierung nach Anspruch 4, **dadurch gekennzeichnet, dass** die konstante Wassermenge 3g beträgt.

6. Verfahren zur Regulierung nach einem der Ansprüche 2 bis 5, **dadurch gekennzeichnet, dass** das Wasser dem Dampfgenerator (3) periodisch zugeführt wird.

7. Verfahren zur Regulierung nach Anspruch 6, **dadurch gekennzeichnet, dass** das Wasser alle zwölf Sekunden dem Dampfgenerator (3) zugeführt wird.

8. Verfahren zur Regulierung nach einem der Ansprüche 1 bis 7, **dadurch gekennzeichnet, dass** die Solltemperatur (Tc) zwischen 50°C und 100°C beträgt.

9. Verfahren zur Regulierung nach einem der Ansprüche 1 bis 8, **dadurch gekennzeichnet, dass** es gleichzeitig zu dem Schritt der Versorgung mit Wasser (P'3) einen Schritt umfasst, bei dem der Raum (2) durch mindestens einen elektrischen Widerstand (13), der entlang der Wand des Raumes (2) angeordnet ist, erhitzt wird.

10. Dampfofen, der einen Garraum (2), einen Dampfgenerator (3), der in dem Raum (2) angeordnet ist, und eine Düse (6) für die Zuführung von Wasser in den Generator (3) aufweist, wobei die Düse (6) über eine Pumpe (9) mit einem Wasserbehälter (7) verbunden ist, **dadurch gekennzeichnet, dass** er eine Temperatursonde (14), die angepasst ist, um die Temperatur innerhalb des Raumes (2) zu messen, Mittel (15) zum Bereitstellen einer Solltemperatur (Tc) und Regulierungsmittel (20, 21) aufweist, die mit der Temperatursonde (14) und mit den Mitteln (15) zum Bereitstellen der Solltemperatur verbunden und angepasst sind, um den Betrieb der Pumpe (9) gemäß dem Verfahren nach einem der Ansprüche 1 bis 9 zu steuern, um dem Dampfgenerator (3) Wasser zuzuführen.

11. Dampfofen nach Anspruch 10, **dadurch gekennzeichnet, dass** die Temperatursonde (14) in dem oberen Abschnitt der Garraums (2) angeordnet ist.

12. Dampfofen nach Anspruch 10 oder 11, **dadurch gekennzeichnet, dass** er einen Durchsatzmesser (10) auf dem Wasserkreis (8) zwischen dem Behälter (7) und der Düse (6) für die Zuführung von Wasser zum Dampfgenerator (3) enthält.

13. Dampfofen nach Anspruch 12, **dadurch gekennzeichnet, dass** die Regulierungsmittel (20, 21) angepasst sind, um den Betrieb der Pumpe (9) in Abhängigkeit des durch den Durchsatzmesser (10) gemessenen Durchsatzes so zu steuern, dass dem Dampfgenerator (3) mit Unterbrechungen eine konstante Wassermenge zugeführt wird.
